# EUROPEAN PATENT SPECIFICATION

(11) **EP 2 657 886 B1**
(45) Date of publication and mention of the grant of the patent: **29.08.2018**
(21) Application number: 13150632.1
(22) Date of filing: 09.01.2013
(51) Int. Cl.: G06F 21/31, G06K 9/00, G06K 9/20

(54) **Method and apparatus for recognizing three-dimensional object**
Verfahren und Vorrichtung zur Erkennung eines 3D Objektes
Procédé et appareil de reconnaissance d'un objet 3D

(30) Priority: 24.04.2012 KR 20120042811
(43) Date of publication of application: 30.10.2013
(73) Proprietor: Samsung Electronics Co., Ltd., Gyeonggi-do 443-742 (KR)
(72) Inventor: Namgoong, Boram, Gyeonggi-do 443-742 (KR); Kim, Suksoon, Gyeonggi-do 443-742 (KR); Lee, Misun, Gyeonggi-do 443-742 (KR); Choi, Donguk, Gyeonggi-do 443-742 (KR)
(74) Representative: HGF Limited

(56) References cited:
- WO-A1-2008/042879
- US-A1- 2007 110 285
- AJMAL S MIAN: "Shade Face: Multiple image-based 3D face recognition", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 September 2009 (2009-09-27), pages 1833-1839, XP031664535, ISBN: 978-1-4244-4442-7

## Description

### BACKGROUND OF THE INVENTION

### Field of the Invention

The present invention relates to an apparatus for recognizing a three-dimensional object, and more particularly, to a method and an apparatus for recognizing a three-dimension object using a light source.

### Description of the Related Art

In recent years, use of a portable terminal such as a portable tablet PC has been increased. Accordingly, a request for a security function of the portable terminal has been increased. The security function is a function which persons except for an owner of the portable terminal cannot use the portable terminal.

According to a password input scheme known in the art, a user may set a password for using the portable terminal. When power of the portable terminal is turned-off and then turned-off or when the portable terminal is switched from a sleep mode to an active state, the portable terminal provides a password input screen. If the user properly inputs a preset password, the portable terminal becomes a state which allows a user to use a function of the portable terminal such as a phone call or use of Internet. Conversely, if the user does not input the password, the portable terminal maintains a lock state. Before inputting a right password, the user cannot use the function of the portable terminal.

As other similar schemes, a scheme using human body information such as iris recognition, fingerprint recognition, and face recognition schemes may be utilized. The user may previously input fingerprint/iris/face images. Next, when power is turned-off and then turned-on or when the portable terminal is switched from a sleep state to an active state, the portable terminal becomes a lock state. The user may provide fingerprint/iris/face images to the portable terminal through a camera of the portable terminal or other input means to release the lock state. If the portable terminal receives the same fingerprint/iris/face images as preset images, it may release the lock state.

Particularly, providing a security function using a face image of an image of an object similar to the face is described. Fundamentally, a face image received by the portable terminal is a two-dimensional image. It is assumed that an owner of the portable terminal previously inputs a face of the owner as security means. After that, when the portable terminal becomes a lock state, the owner of the portable terminal exposes the face of the owner to a camera of the portable terminal to release the lock state. Conversely, even if a face of a person other than the owner of the portable terminal is exposed to a camera of the portable terminal, the lock state is not released. When a face of the owner of the portable terminal is shot, a photograph is outputted, and the photograph is exposed to the camera of the portable terminal, the portable terminal cannot distinguish a face of an actual person of a three-dimension from a two-dimension photograph. Accordingly, there is a problem that a person other than the owner of the portable terminal may release a lock state of the portable terminal in a scheme of exposing a face photograph to the camera. In general, there is a problem in recognition of a face of the person but there causes the same problem in a scheme of recognizing another three-dimension object.

US 2007/0110285 discloses apparatus and methods for determining whether a live, human eye is presented for iris-based recognition. An image is presented on a computer screen and reflected back from the eye. The reflected image is captured and processed to determine whether the reflection is consistent with a human eye.

WO 2008/042879 discloses a method and system for authenticating financial transactions is disclosed wherein biometric data is acquired from a person and the probability of liveness of the person and probability of a match between the person and known biometric information are calculated, preferably according to a formula D = P(p) * (K + P(m)), wherein K is a number between 0.1 and 100, and authenticating if the value of D exceeds a predetermined value.

### SUMMARY OF THE INVENTION

The present invention has been made in view of the above problems, and provides an apparatus for recognizing a three-dimension object not to avoid a security function using a two-dimension photograph, and a method thereof.

In accordance with an aspect of the present invention, a method of releasing of a lock function of a terminal including a display unit for displaying an operation state of the terminal and a shoot unit for receiving an image comprising a human face, the method comprising: receiving an input for commanding a lock function setting of the operational state of the terminal, the lock function setting comprising:
receiving a first image of a human face by setting a first brightness as brightness of the display unit; receiving a second image of a human face by setting second brightness as the brightness of the display unit, wherein the second brightness is different to the first brightness; and comparing the first and second images to extract an interest region having a brightness difference greater than a first threshold; receiving an input for commanding a lock function releasing on the displayed operation state of the terminal; receiving a third image of a human face by setting a third brightness as brightness of the display unit, wherein the third brightness is the same as the first brightness; receiving a fourth image of a human face by setting fourth brightness as the brightness of the display unit, wherein the fourth brightness is different to the third brightness and wherein the same as the second brightness; comparing the fourth image with the third image within a region corresponding to the extracted interest region of the compared first and second images, and
recognizing that the human face acquired after the lock function releasing command is the same as the human face acquired after the lock function setting command, when the brightness change of the corresponding region of the third image and the fourth image is equal to or greater than a second predetermined threshold, wherein the second predetermined threshold is equal to or smaller than the first threshold.

In accordance with another aspect of the present invention, an apparatus for recognizing an object as three-dimensional when using a security function, includes: a display unit for displaying an operation state of a terminal; a shooting unit for receiving an image comprising an human face; an input unit for receiving an input from a user for commanding a lock function setting of operational state, and a further input for commanding a lock function releasing of the operation state; a controller configured to: in response to receiving an input for commanding a lock function setting, control the shooting unit to receive a first image of the human face by setting first brightness as brightness of the display unit, control the shooting unit to receive a second image of the human face by setting second brightness as the brightness of the display unit, wherein the second brightness is different to the first brightness, and compare the first and second images to extract an interest region having a brightness difference greater than a first threshold; in response to receiving an input for commanding a lock function release; control the shooting unit to receive a third image of the human face by setting a third brightness as brightness of the display unit, wherein the third brightness is the same as the first brightness; control the shooting unit to receive a fourth image of the human face by setting fourth brightness as the brightness of the display unit, wherein the fourth brightness is different to the third brightness and wherein the same as the second brightness; compare the fourth image with the third image within a region corresponding to the extracted interest region of the compared first and second images, and recognize that the human face acquired after the lock function releasing command is the same as the human face acquired after the lock function setting command, when the brightness change of the corresponding interest region of the third image and the fourth image is equal to or greater than a second predetermined threshold, wherein the second predetermined threshold is equal to or smaller than the first threshold.

### BRIEF DESCRIPTION OF THE DRAWINGS

The objects, features and advantages of the present invention will be more apparent from the following detailed description in conjunction with the accompanying drawings, in which:
FIG. 1a is a block diagram illustrating a configuration of an apparatus for recognizing a three-dimension object according to an exemplary embodiment of the present invention;
FIG. 1b is a front view of the apparatus for recognizing a three-dimension object shown in FIG. 1a;
FIG. 2 is a flowchart illustrating a method of setting a lock function using a three-dimension object recognition according to a first embodiment of the present invention;
FIG. 3 is a flowchart illustrating a method of recognizing a three-dimension object according to a first embodiment of the present invention;
FIG. 4 is an exemplary diagram illustrating a shot image of a shooting unit according to a first embodiment of the present invention;
FIG. 5 is a flowchart illustrating a method of recognizing a three-dimension object according to a second embodiment of the present invention;
FIG. 6 is a flowchart illustrating a method of recognizing a three-dimension object according to a third embodiment of the present invention; and
FIG. 7 is a diagram illustrating recognition of a three-dimension object according to a third embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

Hereinafter, the method and the apparatus for recognizing a three-dimension object according to an exemplary embodiment of the present invention will be described with the accompanying drawings.

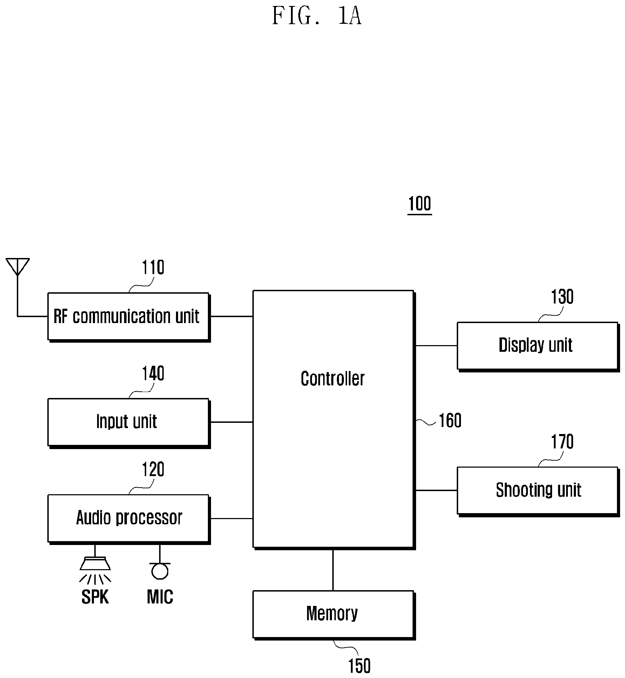

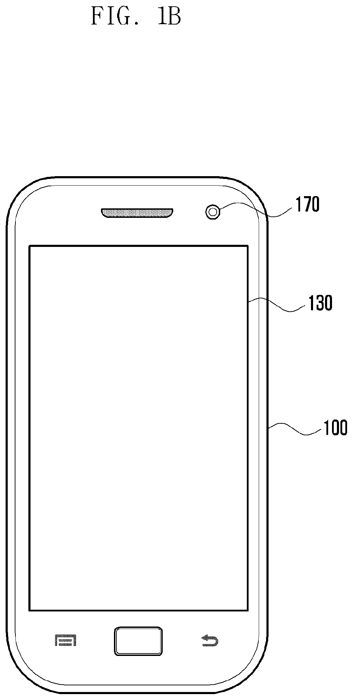

FIG. 1a is a block diagram illustrating a configuration of an apparatus 100 for recognizing a three-dimension object according to an exemplary embodiment of the present invention. Referring to FIG. 1, the apparatus 100 for recognizing a three-dimension object according to an exemplary embodiment of the present invention include a radio frequency (RF) communication unit 110, an audio processor 120, a display unit 130, an input unit 140, a memory 150, a controller 160, and a shooting unit 170.

The RF communication unit 110 performs a transceiving function of corresponding data for wireless communication of the apparatus 100 for recognizing a three-dimension object. The RF communication unit 110 may include an RF transmitter for up-converting a frequency of a transmitted signal and amplifying the converted signal, and an RF receiver for low-noise-amplifying a received signal and down-converting the amplified signal. The RF communication unit 110 receives and outputs data through a wireless channel to the controller 160 and transmits data outputted from the controller 160. In a case of the apparatus 100 for recognizing a three-dimension object which does not support wireless communication, the RF communication unit 110 may be omitted.

The audio processor 120 may be configured by a CODEC. The CODEC may include a data CODEC processing packet data and an audio CODEC processing an audio signal such as a voice. The audio processor 120 converts a digital audio signal into an analog audio signal through the audio CODEC and plays the converted analog audio signal through a speaker SPK. The audio processor 120 converts an analog audio signal inputted from a microphone MIC into a digital audio signal. In a case of the apparatus 100 for recognizing a three-dimension object which does not support audio processing, the audio processor 120 may be omitted.

The input unit 140 receives an input of the user and transfers the input of the user to the controller 160. The input unit 140 may be implemented in the form of a touch sensor and/or a key pad.

The touch sensor detects a touch input of the user. The touch sensor may be configured by a capacitive overlay sensor, a resistive overlay sensor, an infrared beam sensor, or a pressure sensor. Various types of sensor devices capable of detecting contact or pressure of an object may be configured as a touch sensor in addition to the foregoing sensors. The touch sensor detects a touch input of the user and generates and transmits a detection signal to the controller 160. The detection signal includes coordinates data which the user inputs the touch. When the user inputs a touch location moving operation, the touch sensor generates the detection signal including coordinates data of a touch location moving path to the controller 160.

The key pad receives a key operation of the user for controlling the apparatus 100 for recognizing a three-dimension object and generates and transfers an input signal to the controller 160. The key pad may include numeric keys and arrow keys. The key pad may be provided in one side of the apparatus 100 for recognizing a three-dimension object as a predetermined function key.

The display unit 130 visually provides a menu of the apparatus 100 for recognizing a three-dimension object, input data, function setting information and other various information to the user. The display unit 130 performs a function of outputting a booting screen, an idle screen, a menu screen, a call screen, and other application screens. The display unit 110 may be configured by a Liquid Crystal Display (LCD), an Organic Light Emitting Diode (OLED), and an Active Matrix Organic Light Emitting Diode (AMOLED). The display unit 130 performs a function of outputting a booting screen, an idle screen, a menu screen, a call screen, and other application screens of the apparatus 100 for recognizing a three-dimension object.

Further, the display unit 130 according to the embodiment of the present invention converts brightness of a screen into at least two brightness and provides the at least two brightness when performing an object recognition function for releasing the lock screen. If receiving an object image corresponding to at least two screen brightness, the shooting unit 170 may compare respective object images to recognize the objects.

The memory 150 stores programs and data necessary for an operation of the apparatus 100 for recognizing a three-dimension object. The memory 130 may be divided into a program area and a data area. The program area may store a program controlling an overall operation of the apparatus 100 for recognizing a three-dimension object, an operating system booting the apparatus 100 for recognizing a three-dimension object, an application program necessary for playing multimedia contents, and an application program necessary for other option functions of the apparatus 100 for recognizing a three-dimension object, for example, a camera function, a sound playback function, and an image or moving image playback function. The data area may store data generated according to use of the apparatus 100 for recognizing a three-dimension object, images, moving pictures, phone-books, and audio data.

Particularly, the memory 150 according to the embodiment of the present invention may store an object (e.g., face) image for a lock function according to setting of the user or information obtained by processing the object image.

The shooting unit 170 shoots an image under the control of the controller 160. The shooting unit 170 has the same operation scheme or configuration as those of the related art, and thus the detailed description thereof is appropriately omitted.

FIG. 1b is a front view of the apparatus 100 for recognizing a three-dimension object shown in FIG. 1a.

Referring to FIG. 1b, a screen of the display unit 130 and a camera of the shooing unit 170 have to orient toward the same direction. That is, the screen of the display unit 130 and a lens of the shooting unit 170 should be disposed so that light emitted from the shooting unit 170 reaches an object for shooting and is again reflected from the shooting unit 170.

Referring back to FIG. 1a, the controller 160 controls an overall operation of respective constituent elements of the apparatus 100 for recognizing a three-dimension object.

Particularly, when receiving a lock function setting command, the controller 160 shoots a first image by setting first brightness to the display unit 130, and shoots a second image by again setting second brightness differing from the first brightness to the display unit 130. Next, if the apparatus 100 for recognizing a three-dimension object becomes the lock state and receives a command for lock release, the controller 160 shoots a third image by setting third brightness to the display unit 130, and shoots a fourth image by again setting second brightness differing from the third brightness to the display unit 130. In the embodiment, the third brightness may be the same as or differ from the first brightness. In the same manner, in the embodiment, the fourth brightness may be the same as or differ from the second brightness. The controller 160 compares the second image with the first image, and compares the fourth image with the third image. The controller 160 may recognize a three-dimension object based on the comparison results. In another embodiment, the controller 160 may control the shooting unit 170 to repeatedly shoot while increasing brightness of the display unit 130 from third brightness to limited brightness at preset speed or lower. According to another embodiment, the controller 160 may detect a direction of the object from the image and converts the image according thereto to recognize the three-dimension object.

Concrete operations of respective constituent elements shown in FIG. 1 will be described in detail with reference to following drawings.

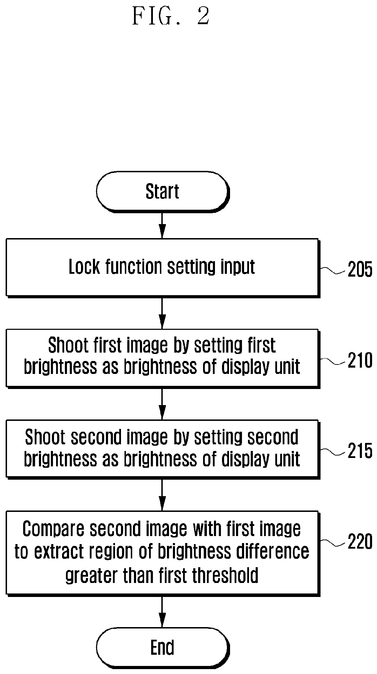

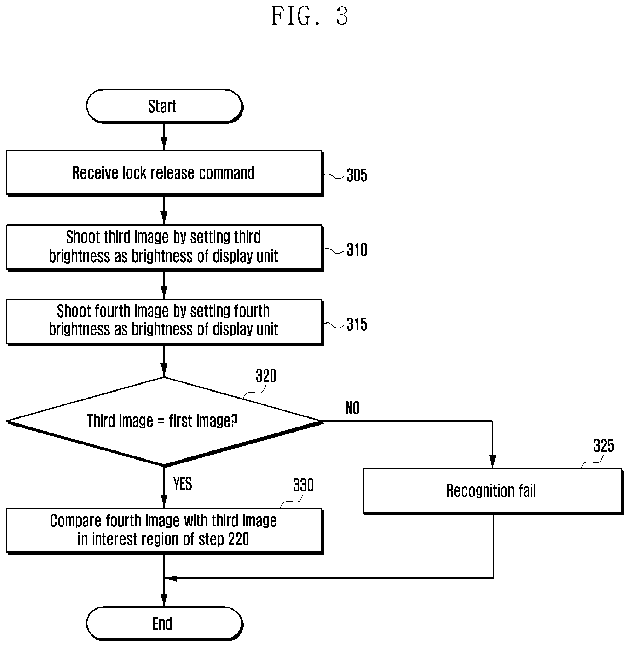

FIG. 2 is a flowchart illustrating a method of setting a lock function using three-dimension object recognition according to a first embodiment of the present invention. FIG. 3 is a flowchart illustrating a method of recognizing a three-dimension object according to a first embodiment of the present invention. A procedure of FIG. 3 may be performed after the procedure of FIG. 2.

An input unit 140 receives an input for commanding lock function setting start from the user (205). The user may command the lock function setting through a menu or other schemes. If receiving the input for commanding the lock function setting, the controller 160 may perform a procedure of setting a lock function as illustrated in steps 210 to 215.

The controller 160 may shoot the first image by setting first brightness as brightness of the display unit 130 (210). The controller 160 may shoot the second image by setting second brightness as brightness of the display unit 130 (215). The second brightness should differ from the first brightness. The following embodiment will be described on the assumption that the second brightness is brighter than the first brightness.

The controller 160 compares the second image with the first image to extract a region (interest region) having a brightness difference greater than a first threshold (threshold of interest region) (220). The first threshold may be a preset value. According to another embodiment, the first threshold may be set such that a predetermined part of entire regions becomes the interest region according to a brightness difference distribution in a comparison result of entire images. That is, to set the interest region to be 10% of entire regions, if there is 10 % of entire regions having a brightness difference greater than A, the threshold is A.

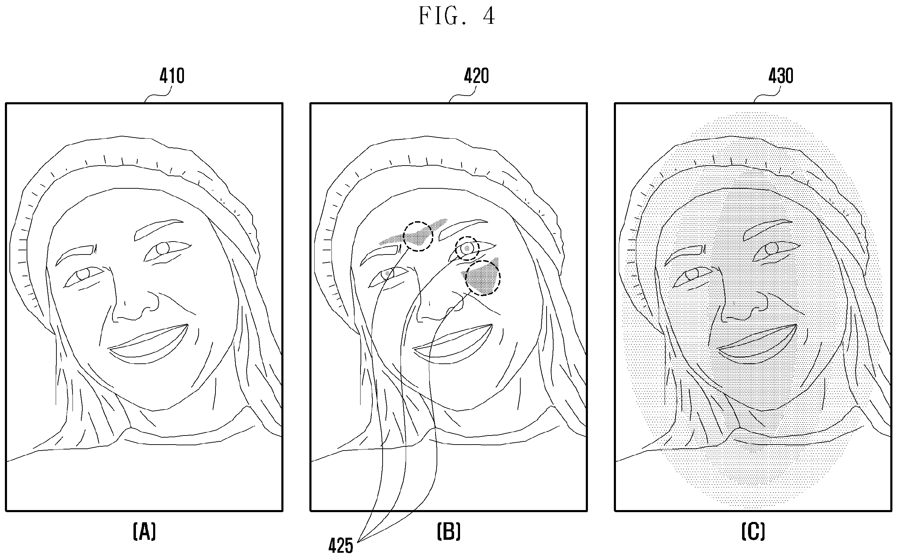

FIG. 4 is an exemplary diagram illustrating a shot image of a shooting unit 170 according to a first embodiment of the present invention.

A first image 410 is an image shooting a three-dimension object, for example, a human face by setting relatively dark brightness (first brightness). A second image 420 is an image shooting the human face by setting brightness (second brightness) brighter than that of the first image. A third image 430 is an image again shooting a two-dimension photograph outputting the human face by the shooting unit 170 by setting the third brightness to the display unit 130.

Since the human face is the three-dimension object, if the display unit 130 emits strong light, the human face may reflect light from the display unit 130 more as compared with a protruding part such as forehead, eyes, cheekbone regions 425 or parts having special materials. Greater brightness change on the regions 425 is observed as compared with other regions. However, the two-dimension photograph relatively uniformly reflects light of the display unit 130. There is no brightness change in an image 430 again shooting the two-dimension photograph except that a central part of a photograph relatively adjacent to a center of the display unit 130 shines brightly.

Accordingly, if the shooting unit 170 shoots an actual three-dimension object such as a human face in steps 210 and 215, a region 425 having great brightness change may be extracted according to a stereoscopic characteristic or a material characteristic. Hereinafter, the region is referred to as 'interest region'.

If a lock setting procedure of FIG. 2 is terminated, a lock release operation may be performed in a scheme of FIG. 3.

A controller 160 receives a lock release command (305). For example, when the apparatus 100 for recognizing a three-dimension object is switched from a sleep mode to an active mode or power of the apparatus 100 for recognizing a three-dimension object is turned-off and then turned-on, the controller 160 may receive the lock release command. When receiving a command for performing an operation requiring other security, for example, initialization or a function such as private information reading included in the apparatus, the controller 160 may receive the lock release command. When receiving the lock release command, the controller 160 may perform steps 310 and next steps. Although the lock release procedure is illustrated, steps 310 and next steps may be performed for an operation requiring other face recognition or object recognition.

The controller 160 may shoot a third image by setting a third brightness as brightness of the display unit 130 (310). The controller 160 may shoot a fourth image by setting a fourth brightness as brightness of the display unit 130 (315). It is assumed that the third brightness is the same as the first brightness. However, in another embodiment, the third brightness may differ from the first brightness. It is assumed that the fourth brightness is the same as the second brightness. However, in another embodiment, the fourth brightness may differ from the second brightness.

An image displayed on the display unit 130 at steps 310 and 315 may be an image in which a full screen is similar to white. Accordingly, radiating effect of light through the display unit 130 may be maximized. According to a modified embodiment, an image displayed through the display unit 130 may be set according to a selection input of the user. A procedure of setting an image displayed through the display unit 130 may be performed in addition to a setting procedure of FIG. 2.

The controller 160 determines whether the third image is the same as, that is, accords with the first image (320). Determination of the identity/according of the image does not determine whether the third image is physically the same as the first image but an object of the third image is substantially the same as the first image. That is, if the third image accords with the first image by suitably correcting or converting the first image and the third image, the controller 160 determines that the third image is the same as the first image. Although the foregoing embodiment has illustrated that the third image is compared with the first image, the fourth image may be compared with the second image, the third image is compared with the second image, or the fourth image may be compared with the first image.

When the third image differs from the first image, the controller 160 determines that three-dimension object recognition fails (325). That is, the controller 160 determines that a lock release attempt performed through steps 310 and 315 is a lock release attempt of a user which is not authenticated, and maintains a lock state. When the third image differs from the first image, the process goes to step 330.

The controller 160 compares the fourth image with the third image in the region extracted at step 220, that is, an interest region (330). As the comparison result of the third and fourth images, when a brightness difference of the interest region is equal to or greater than a second preset threshold (recognition threshold), the controller 160 determines that a currently shot object is the same as an object set in the procedure of FIG. 2. As the comparison result of the third and fourth images, when a brightness difference of the interest region is equal to or greater than a second preset threshold (recognition threshold), the controller 160 determines that a currently shot object differs from then object set in the procedure of FIG. 2. The second preset threshold (recognition threshold) may be less than the first threshold (threshold of interest region) of FIG. 2. If the second threshold is very large, it may not be determined that a shot object is the same as a preset object. If the second threshold is very small, a case of shooting a two-dimension photograph may not be filtered. Accordingly, it may be preferable that the second threshold is slightly smaller than the first threshold. A concrete threshold may be experimentally determined so that erroneous recognition is minimized.

According to another example when parts except for the interest region has a brightness difference greater than a third threshold, the controller 160 may perform a step of determining that object recognition fails regardless of step 330. An artificial illumination is applied to increase the brightness difference greater than a predetermined value to prevent a security function from being incapacitated.

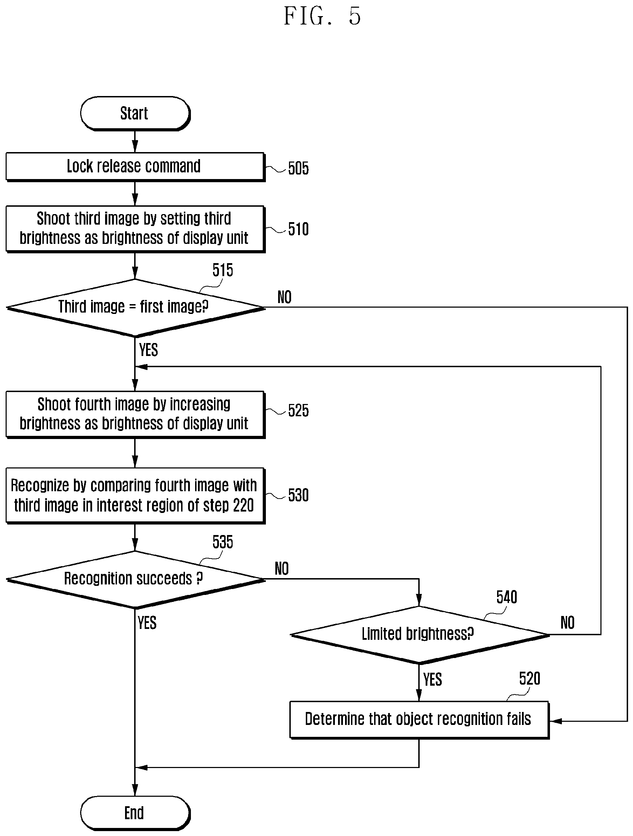

FIG. 5 is a flowchart illustrating a method of recognizing a three-dimension object according to a second embodiment of the present invention. It is assumed that a lock function is set according to a procedure of FIG. 2 in the second embodiment.

A controller 160 receives a command starting a lock release operation (505). Then, the controller 160 shoots a third image by setting third brightness as brightness of the display unit 130 (510). The third brightness may be the same value as that of the first brightness. The controller 160 determines whether the third image is the same as the first image (515). Since a determination procedure of the identity of the image is similar to a procedure of step 320, a detailed description thereof is omitted. When the third image differs from the first image, the controller 160 determines that the object recognition fails (520). That is, the lock state is not released. When the third image is the same as the first image, the process goes to step 525.

The controller 160 shoots a fourth image by increasing brightness of the display unit 130 by a predetermined amount (525). In this case, the increased brightness amount of the display unit 130 is limited to less than a preset value. When a screen of the display unit 130 become bright at excessively high speed, the user may show action, for example, momentarily feels discomfort, makes a wry face, or closes eyes. Accordingly, it does make the display unit 130 to be bright at excessively high speed.

The controller 160 recognizes the object by comparing the fourth image with the third image in the interest region at step 220 (530). The object recognition procedure of step 530 is the same/similar as step 330 of FIG. 3, and thus the detailed description thereof is appropriately omitted.

The controller 160 determines whether object recognition succeeds (535). When the object recognition succeeds, a lock state is released and the process is terminated. When the object recognition does not succeed, the process goes to step 540. The controller 160 determines whether the brightness of the display unit 130 reaches preset limited brightness, that is, is equal to or greater than the limited brightness (540). When the brightness of the display unit 130 reaches the limited brightness, the controller 160 determines that the object recognition fails (520). Accordingly, the lock state is not released. When the brightness of the display unit 130 does not reach the limited brightness, the process returns to step 525. When the object recognition succeeds or until the brightness of the display unit 130 reaches the limited brightness, steps 525 to 540 may be repeatedly performed.

According to the scheme of FIG. 5, face recognition may be efficiently performed while reducing discomfort of the user in a scheme of repeating shooting by slowly increasing the brightness of the display unit 130.

According to a modified example of the scheme in FIG. 5, the apparatus 100 for recognizing a three-dimension object may include an illumination sensor. According to the modified embodiment, when receiving a lock release command of step 505, the controller 160 may set start brightness of the display unit 130 according to a peripheral illumination value measured by the illumination sensor. That is, when the peripheral illumination is relatively bright, the start brightness of the display unit 130 may be set brighter. Conversely, when the peripheral illumination is relatively dark, the start brightness of the display unit 130 may be set darker. Next, the controller 160 may shoot a third image when the brightness of the display unit 130 reaches the third brightness of step 510 while slowly increasing the brightness of the display unit 130, and perform following operations.

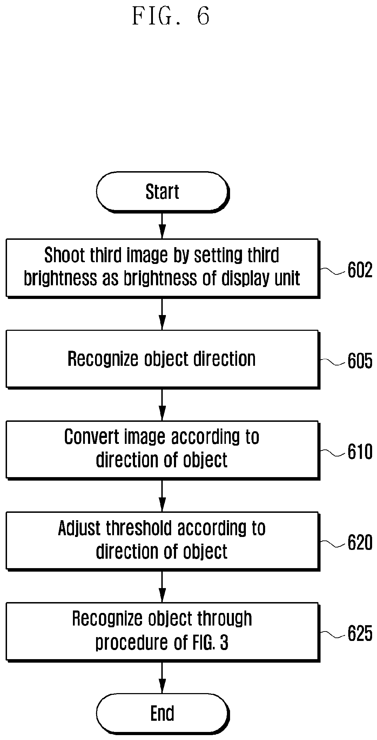

FIG. 6 is a flowchart illustrating a method of recognizing a three-dimension object according to a third embodiment of the present invention.

A controller 160 shoots a third image by setting third brightness as brightness of a display unit 130 (602). Step 602 is the same as step 310 of FIG. 3, and thus the detailed description thereof is appropriately omitted.

The controller 160 recognizes a direction of an object based on the third image (605).

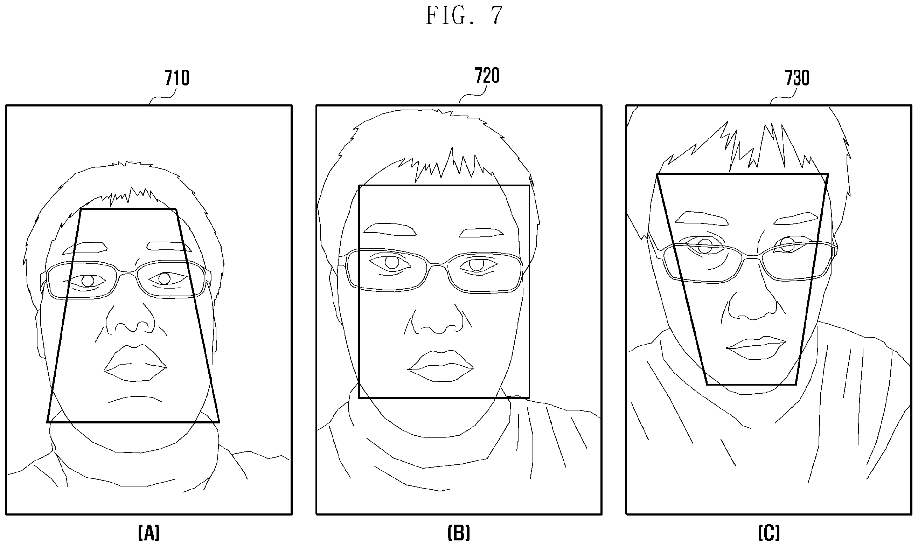

FIG. 7 is a diagram illustrating recognition of a three-dimension object according to a third embodiment of the present invention. A first screen 710 is an image shooting a face from the bottom. A second screen 720 is an image shooting a face from a front side. A third screen 730 is an image shooting a face from the top. Referring to FIG. 7, as the object is located away from the shooting unit 170, the object is shot smaller, and accordingly a whole shape of the face is differently expressed. An upper portion and a lower portion of the face in the first screen 710 are shown smaller and larger as the second screen 720. A lower portion and an upper portion of the face in the third screen 730 are shown smaller and larger as the second screen 720. Accordingly, if an object direction is normally recognized, erroneous recognition may be prevented.

To recognize the direction of the object, various schemes may be performed independently or complexly. For example, the apparatus 100 for recognizing a three-dimension object may include at least one of a geomagnetic sensor/acceleration sensor/gyro sensor. In this case, the controller 160 may a direction of the apparatus 100 for recognizing a three-dimension object using the geomagnetic sensor/acceleration sensor/gyro sensor. When recognizing the direction of the apparatus 100 for recognizing a three-dimension object, the apparatus 100 may recognize a relative direction of the face and other objects using the direction of the apparatus 100. According to another embodiment, the apparatus 100 for recognizing a three-dimension object may recognize a direction of an object using disposal of a characteristic part of a three-dimension object indicated on the third image. For example, in a case of a face image, a direction of the object may be determined based on a disposed form of a characteristic part such as eyes or a mouse. As a result of determining a ration of a distance between eyes and a size of a mouse in the third image, when the distance between the eyes is less than a suitable ratio, the controller 160 may determine that the object is shot from the bottom. A direction of the object may be recognized through a disposal of a characteristic part of the face. The direction of the object may be recognized using information of the geomagnetic sensor/acceleration sensor/gyro sensor and disposal of a characteristic part in a shot image.

The controller 160 converts an image according to the recognized direction of the object (610). For example, when it is recognized that the object is shot from the bottom, image correction may be performed according to a perspective in such a way that a size of a lower part is converted small and the size of the upper part is converted large.

The controller 160 adjusts a threshold for recognition according to a direction of an object (620). As illustrated referring to FIG. 3, when a brightness difference of an interest region is equal to or greater than a recognition threshold, the controller 160 determines that a shot object is the same as a preset object. However, since the brightness difference may be changed according to a shot direction, the controller 160 reflects this. For example, when the face is shot from the bottom (710), the controller 160 may control a recognition threshold of an interest region corresponding to a forehead located in an upper side of the face or eyes smaller. This is why the forehead and eyes cannot normally receive and reflect light of the display unit 130 because the forehead and eyes are distant from the display unit 130. Conversely, when the face is shot from the top (730), the controller 160 may control a recognition threshold of an interest region corresponding to a forehead located in an upper side of the face or eyes larger. This is why the forehead and eyes cannot receive and reflect light of the display unit 130 because the forehead and eyes are near to the display unit 130.

The controller 160 recognizes the object through the procedure of FIG. 3 (625). The fourth image of step 315 may be converted in an object recognition procedure in the same manner in the third image. The procedure of FIG. 3 is equally applicable except for image conversion according to the direction of the object and control of the threshold. A procedure of FIG. 5 is applicable instead of the procedure of FIG. 3.

According to the scheme of FIGS. 6 and 7, even if the user does not turn or bend a face unnaturally, the face is exactly recognized so that a face recognition function may be conveniently used.

Here, it will be appreciated that combinations of process flowcharts and respective blocks thereof may be achieved by instructions of a computer program. Because instructions of a computer program may be mounted in a processor of a general-purpose computer, a special computer, or programmable data processing equipment, they generate means for executing functions described in flowchart block(s). Because the instructions of a computer program may be stored in a computer usable or readable memory of a computer or a programmable data processing equipment to implement a function in a specific way, they may produce manufacturing goods including instruction means executing functions described in flowchart block(s). Because the instructions of a computer program may be mounted in a computer or a programmable data processing equipment, a series of operation stages are executed on the computer or the programmable data processing equipment to produce a process executed by the computer such that the instructions executing the computer or the programmable data processing equipment may provide stages for executing functions described in flowchart block(s).

Further, each block may indicate a part of a module including at least one executable instruction for executing specific logical function(s), a segment, and a code. In substitute execution embodiments, it should be noticed that functions mentioned in blocks may be created beyond an order. Two sequentially shown blocks may be performed really and simultaneously or be performed in a reverse order according to a corresponding function. As used in this embodiment, the term '∼ unit' means a software, or a hardware structural element such as FPGA or ASIC, and performs some functions. However, '∼ unit' is not limited to the software or hardware. A '∼ unit' may be configured in an addressable storing medium to play at least one processor. Accordingly, for example, '∼ unit' includes software structural elements, object-oriented software structural elements, class structural elements, task structural elements, processes, functions, attributes, procedures, sub-routines, segments of a program code, drivers, firmware, micro code, circuit, data, database, data structures, tables, arrays, and variables. Functions provided to structural elements and '∼ units may be combined by a smaller number of structural elements and '∼ unit's or divided into additional structural elements and '∼ units. In addition, structural elements and '∼ unit's may be implemented to play at least one CPU in a device or security multimedia card.

The embodiment of the present invention represents an effect which may provide an apparatus and a method for recognizing a three-dimension object to prevent a security function from being incapacitated using a two-dimension photograph.

## Claims

1. A method for releasing of a lock function of a terminal including a display unit (130) for displaying an operation state of the terminal and a shoot unit (170) for receiving an image comprising a human face, the method comprising:
receiving (205) an input for commanding a lock function setting of the operational state of the terminal, the lock function setting comprising:
receiving (210) a first image of a human face by setting a first brightness as brightness of the display unit (130);
receiving (215) a second image of a human face by setting second brightness as the brightness of the display unit (130), wherein the second brightness is different to the first brightness; and
comparing (220) the first and second images to extract an interest region having a brightness difference greater than a first threshold;
receiving (305) an input for commanding a lock function releasing on the displayed operation state of the terminal;
receiving (310) a third image of a human face by setting a third brightness as brightness of the display unit (130), wherein the third brightness is the same as the first brightness;
receiving (315) a fourth image of a human face by setting fourth brightness as the brightness of the display unit (130), wherein the fourth brightness is different to the third brightness and the same as the second brightness;
comparing (330) the fourth image with the third image within a region corresponding to the extracted interest region of the compared first and second images, and
recognizing that the human face acquired after the lock function releasing command is the same as the human face acquired after the lock function setting command, when the brightness change of the corresponding region of the third image and the fourth image is equal to or greater than a second predetermined threshold, wherein the second predetermined threshold is smaller than the first threshold.

2. The method of claim 1, wherein the receiving (315) of the fourth image comprises repeatedly receiving the fourth image while increasing the brightness of the display unit (130) from the third brightness to limited brightness at speed less than a preset value, and
recognizing the human face comprises recognizing the human face acquired after the lock function releasing command is the same as the human face acquired after the lock function setting command based on the brightness difference of the corresponding interest region by comparing (330) the fourth image with the third image while the brightness of the display unit (130) is increased.

3. The method of claim 1, wherein recognizing the human face comprises:
detecting (605) a direction of the human face in the third image;
converting (610) the third image or a comparison target image according to the recognized direction of the human face;
comparing the converted comparison target image with the third image or comparing the comparison target image with the first converted image.

4. The method of claim 1, wherein the recognizing the human face comprises adjusting the preset threshold value for human face recognition with respect to the interest region being relatively farther away from a direction of the human face of the third image when compared with a direction of an human face of the first image according to the recognized direction of the human face.

5. An apparatus (100) for releasing of a lock function, the apparatus (100) comprising:
a display unit (130) for displaying an operation state of a terminal;
a shooting unit (170) for receiving an image comprising an human face;
an input unit (140) for receiving an input from a user for commanding a lock function setting of operational state, and a further input for commanding a lock function releasing of the operation state;
a controller (160) configured to:
in response to receiving an input for commanding a lock function setting, control the shooting unit (170) to receive a first image of the human face by setting first brightness as brightness of the display unit (130),
control the shooting unit (170) to receive a second image of the human face by setting second brightness as the brightness of the display unit (130), wherein the second brightness is different to the first brightness, and
compare the first and second images to extract an interest region having a brightness difference greater than a first threshold;
in response to receiving an input for commanding a lock function release;
control the shooting unit (170) to receive a third image of the human face by setting a third brightness as brightness of the display unit (130), wherein the third brightness is the same as the first brightness;
control the shooting unit (170) to receive a fourth image of the human face by setting fourth brightness as the brightness of the display unit (130), wherein the fourth brightness is different to the third brightness and the same as the second brightness;
compare the fourth image with the third image within a region corresponding to the extracted interest region of the compared first and second images, and
recognize that the human face acquired after the lock function releasing command is the same as the human face acquired after the lock function setting command, when the brightness change of the corresponding interest region of the third image and the fourth image is equal to or greater than a second predetermined threshold, wherein the second predetermined threshold is smaller than the first threshold.

6. The apparatus (100) of claim 5, wherein the controller (160) is further configured to:
control the shooting unit (170) to repeatedly receive the fourth image while increasing the brightness of the display unit (130) from the third brightness to limited brightness at speed less than a preset value, and
recognize the human face acquired after the lock function releasing command is the same as the human face acquired after the lock function setting command based on the brightness difference of the corresponding interest region by comparing the fourth image with the third image while the brightness of the display unit (130) is increased.

7. The apparatus (100) of claim 5, wherein the controller (160) is further configured to:
detect a direction of the human face in the third image, convert the third image or a comparison target image
according to the recognized direction of the human face, and
compare the converted comparison target image with the third image or compare the comparison target image with the first converted image.

8. The apparatus (100) of claim 5, wherein the controller (160) is further configured to:
control the second threshold with respect to an interest region being relatively farther away from a direction of the human face of the third image as compared with a direction of the human face of the first image according to the recognized direction of the human face.

## Patentansprüche

1. Verfahren zum Freigeben einen Sperrfunktion eines Endgeräts mit einer Anzeigeeinheit (130) zum Anzeigen eines Betriebszustands des Endgeräts und einer Aufnahmeeinheit (170) zum Empfangen eines Bilds, das ein menschliches Gesicht aufweist, wobei das Verfahren aufweist:
Empfangen (205) einer Eingabe zum Anweisen einer Sperrfunktionseinstellung des Betriebszustands des Endgeräts, wobei die Sperrzustandseinstellung aufweist:
Empfangen (210) eines ersten Bilds eines menschlichen Gesichts durch Einstellen einer ersten Helligkeit als Helligkeit der Anzeigeeinheit (130);
Empfangen (215) eines zweiten Bilds eines menschlichen Gesichts durch Einstellen einer zweiten Helligkeit als die Helligkeit der Anzeigeeinheit (130), wobei die zweite Helligkeit sich von der ersten Helligkeit unterscheidet; und
Vergleichen (220) der ersten und zweiten Bilder, um einen Bereich von Interesse zu extrahieren, der eine größere Helligkeitsdifferenz als ein erster Schwellenwert hat;
Empfangen (305) einer Eingabe zum Anweisen einer Sperrfunktionsfreigabe in dem angezeigten Betriebszustand des Endgeräts;
Empfangen (310) eines dritten Bilds eines menschlichen Gesichts durch Einstellen einer dritten Helligkeit als Helligkeit der Anzeigeeinheit (130), wobei die dritte Helligkeit dieselbe wie die erste Helligkeit ist;
Empfangen (315) eines vierten Bilds eines menschlichen Gesichts durch Einstellen einer vierten Helligkeit als die Helligkeit der Anzeigeeinheit (130), wobei die vierte Helligkeit sich von der dritten Helligkeit unterscheidet und dieselbe wie die zweite Helligkeit ist;
Vergleichen (330) des vierten Bilds mit dem dritten Bild in einem Bereich, der dem extrahierten Bereich von Interesse der verglichenen ersten und zweiten Bilder entspricht, und
Erkennen, dass das menschliche Gesicht, das nach dem Sperrfunktionsfreigabebefehl erfasst wurde, dasselbe ist wie das menschliche Gesicht, das nach dem Sperrfunktionseinstellungsbefehl erfasst wurde, wenn die Helligkeitsänderung des entsprechenden Bereichs des dritten Bilds und des vierten Bilds gleich oder größer als ein zweiter vorbestimmten Schwellenwert ist, wobei der zweite vorbestimmte Schwellenwert kleiner als der erste Schwellenwert ist.

2. Verfahren nach Anspruch 1, wobei das Empfangen (315) des vierten Bilds ein wiederholtes Empfangen des vierten Bilds aufweist, während die Helligkeit der Anzeigeeinheit (130) von der dritten Helligkeit auf eine begrenzte Helligkeit mit einer Geschwindigkeit zunimmt, die kleiner als ein voreingestellter Wert ist, und
das Erkennen des menschliche Gesichts ein Erkennen aufweist, dass das menschliche Gesicht, das nach dem Sperrfunktionsfreigabebefehl erfasst wurde, dasselbe wie das menschliche Gesicht ist, das nach dem Sperrfunktionseinstellungsbefehl auf Grundlage der Helligkeitsdifferenz des entsprechenden Bereichs von Interesse durch Vergleichen (330) des vierten Bilds mit dem dritten Bild erfasst wurde, während die Helligkeit der Anzeigeeinheit (130) zugenommen hat.

3. Verfahren nach Anspruch 1, wobei das Erkennen des menschlichen Gesichts aufweist:
Erfassen (605) einer Richtung des menschlichen Gesichts in dem dritten Bild;
Umwandeln (610) des dritten Bilds oder eines Vergleichszielbilds gemäß der erkannten Richtung des menschlichen Gesichts;
Vergleichen des umgewandelten Vergleichszielbilds mit dem dritten Bild oder Vergleichen des Vergleichszielbilds mit dem ersten umgewandelten Bild.

4. Verfahren nach Anspruch 1, wobei das Erkennen des menschlichen Gesichts ein Anpassen des voreingestellten Schwellenwerts für menschliche Gesichtserkennung in Bezug auf den Bereich von Interesse relativ weiter entfernt von einer Richtung des menschlichen Gesichts des dritten Bilds ist im Vergleich mit einer Richtung des menschlichen Gesichts des ersten Bilds gemäß der erkannten Richtung des menschlichen Gesichts.

5. Vorrichtung (100) zum Freigeben einer Sperrfunktion, wobei die Vorrichtung (100) aufweist:
eine Anzeigeeinheit (130) zum Anzeigen eines Betriebszustands eines Endgeräts;
eine Aufnahmeeinheit (170) zum Empfangen eines Bilds, das ein menschliches Gesicht aufweist;
eine Eingabeeinheit (140) zum Empfangen einer Eingabe von einem Benutzer zum Anweisen einer Sperrfunktionseinstellung eines Betriebszustands, und eine weitere Eingabe zum Anweisen einer Sperrfunktionsfreigabe des Betriebszustands;
einen Controller (160), der konfiguriert ist zum:
Steuern der Aufnahmeeinheit (170), in Reaktion auf ein Empfangen einer Eingabe zum Anweisen einer Sperrfunktionseinstellung, ein erstes Bild des menschlichen Gesichts zu empfangen, indem eine erste Helligkeit als Helligkeit der Anzeigeeinheit (130) eingestellt wird,
Steuern der Aufnahmeeinheit (170), ein zweites Bild des menschlichen Gesichts durch Einstellen einer zweiten Helligkeit als die Helligkeit der Anzeigeeinheit (130) zu empfangen, wobei die zweite Helligkeit sich von der ersten Helligkeit unterscheidet; und
Vergleichen der ersten und zweiten Bilder, um einen Bereich von Interesse mit einer Helligkeitsdifferenz zu extrahieren, die größer als ein erster Schwellenwert ist;
Steuern der Aufnahmeeinheit (170), in Reaktion auf eine Eingabe zum Anweisen einer Sperrfunktionsfreigabe, ein drittes Bild des menschlichen Gesichts zu empfangen, indem eine dritte Helligkeit als Helligkeit der Anzeigeeinheit (130) eingestellt wird, wobei die dritte Helligkeit dieselbe wie die erste Helligkeit ist;
Steuern der Aufnahmeeinheit (170), ein viertes Bild des menschlichen Gesichts durch Einstellen einer vierten Helligkeit als die Helligkeit der Anzeigeeinheit (130) zu empfangen, wobei die vierte Helligkeit sich von der dritten Helligkeit unterscheidet und dieselbe wie die zweite Helligkeit ist;
Vergleichen des vierten Bilds mit dem dritten Bild in einem Bereich,
der dem extrahierten Bereich von Interesse der verglichenen ersten und zweiten Bilder entspricht, und
Erkennen, dass das menschliche Gesicht, das nach dem Sperrfunktionsfreigabebefehl erfasst wurde, dasselbe ist wie das menschliche Gesicht, das nach dem Sperrfunktionseinstellungsbefehl erfasst wurde, wenn die Helligkeitsänderung des entsprechenden Bereichs von Interesse des dritten Bilds und des vierten Bilds gleich oder größer als ein zweiter vorbestimmten Schwellenwert ist, wobei der zweite vorbestimmte Schwellenwert kleiner als der erste Schwellenwert ist.

6. Vorrichtung (100) nach Anspruch 5, wobei der Controller (160) ferner konfiguriert ist zum:
Steuern der Aufnahmeeinheit (170), das vierte Bild wiederholt zu empfangen, während die Helligkeit der Anzeigeeinheit (130) von der dritten Helligkeit auf eine begrenzte Helligkeit mit einer Geschwindigkeit zunimmt, die kleiner als ein voreingestellter Wert ist, und
Erkennen, dass das menschliche Gesicht, das nach dem Sperrfunktionsfreigabebefehl erfasst wurde, dasselbe wie das menschliche Gesicht ist, das nach dem Sperrfunktionseinstellungsbefehl auf Grundlage der Helligkeitsdifferenz des entsprechenden Bereichs von Interesse durch Vergleichen des vierten Bilds mit dem dritten Bild erfasst wurde, während die Helligkeit der Anzeigeeinheit (130) zugenommen hat.

7. Vorrichtung (100) nach Anspruch 5, wobei der Controller (160) ferner konfiguriert ist zum:
Erfassen einer Richtung des menschlichen Gesichts in dem dritten Bild, Umwandeln des dritten Bilds oder eines Vergleichszielbilds
gemäß der erkannten Richtung des menschlichen Gesichts, und
Vergleichen des umgewandelten Vergleichszielbilds mit dem dritten Bild oder Vergleichen des Vergleichszielbilds mit dem ersten umgewandelten Bild.

8. Vorrichtung (100) nach Anspruch 5, wobei der Controller (160) ferner konfiguriert ist zum:
Steuern des zweiten Schwellenwerts in Bezug auf einen Bereich von Interesse, der relativ weiter entfernt von einer Richtung des menschlichen Gesichts des dritten Bilds ist im Vergleich mit einer Richtung des menschlichen Gesichts des ersten Bilds gemäß der erkannten Richtung des menschlichen Gesichts.

## Revendications

1. Procédé permettant de libérer une fonction de verrouillage d'un terminal comprenant une unité d'affichage (130) destinée à afficher un état de fonctionnement du terminal et une unité de prise de vue (170) destinée à recevoir une image comprenant un visage humain, ledit procédé comprenant :
la réception (205) d'une entrée pour ordonner une définition de fonction de verrouillage de l'état de fonctionnement du terminal, ladite définition de fonction de verrouillage comprenant :
la réception (210) d'une première image d'un visage humain en définissant une première luminosité en tant que luminosité de l'unité d'affichage (130);
la réception (215) d'une deuxième image d'un visage humain en définissant une deuxième luminosité en tant que luminosité de l'unité d'affichage (130), ladite deuxième luminosité étant différente de la première luminosité ; et
la comparaison (220) des première et deuxième images pour extraire une zone d'intérêt présentant une différence de luminosité supérieure à un premier seuil ;
la réception (305) d'une entrée pour ordonner une libération de fonction de verrouillage sur l'état d'opération affichée du terminal ;
la réception (310) d'une troisième image d'un visage humain en définissant une troisième luminosité en tant que luminosité de l'unité d'affichage (130), ladite troisième luminosité étant identique à la première luminosité ;
la réception (315) d'une quatrième image d'un visage humain en définissant la quatrième luminosité en tant que luminosité de l'unité d'affichage (130), ladite quatrième luminosité étant différente de la troisième luminosité et identique à la deuxième luminosité ;
la comparaison (330) de la quatrième image avec la troisième image dans une zone correspondant à la zone d'intérêt extraite des première et seconde images comparées, et
la reconnaissance que le visage humain acquis après l'instruction de libération de fonction de verrouillage est le même que le visage humain acquis après la commande de définition de fonction de verrouillage, lorsque le changement de luminosité de la zone correspondante de la troisième image et de la quatrième image est supérieur ou égal à un seuil préétabli, ledit second seuil préétabli étant inférieur au premier seuil.

2. Procédé selon la revendication 1, ladite réception (315) de la quatrième image comprenant la réception de manière répétitive de la quatrième image tout en augmentant la luminosité de l'unité d'affichage (130) depuis la troisième luminosité jusqu'à une luminosité limitée à une vitesse inférieure à une valeur prédéfinie, et
ladite reconnaissance du visage humain comprenant la reconnaissance que le visage humain acquis après l'instruction de libération de fonction de verrouillage est le même que le visage humain acquis après que l'instruction de définition de fonction verrouillage sur la base de la différence de luminosité de la zone d'intérêt correspondante en comparant (330) la quatrième image avec la troisième image tout en augmentant luminosité de l'unité d'affichage (130).

3. Procédé selon la revendication 1, ladite reconnaissance du visage humain comprenant :
la détection (605) d'une direction du visage humain dans la troisième image ;
la conversion (610) de la troisième image ou d'une image cible de comparaison selon la direction reconnue du visage humain ;
la comparaison de l'image cible de comparaison converti avec la troisième image ou en comparant l'image cible de comparaison avec la première image convertie.

4. Procédé selon la revendication 1, ladite reconnaissance du visage humain comprenant le réglage de la valeur seuil prédéfinie pour la reconnaissance de visage humain par rapport à la zone d'intérêt relativement plus éloignée d'une direction du visage humain de la troisième image lorsque elle est comparée avec une direction d'un visage humain de la première image selon la direction reconnue du visage humain.

5. Appareil (100) permettant la libération d'une fonction de verrouillage, ledit appareil (100) comprenant :
une unité d'affichage (130) destinée à afficher un état de fonctionnement d'un terminal ;
une unité de prise de vue (170) permettant de recevoir une image comprenant un visage humain ;
une unité d'entrée (140) permettant de recevoir une entrée utilisateur pour l'instruction d'une définition de fonction de verrouillage d'état opérationnel et une entrée supplémentaire pour la l'instruction d'une libération de fonction de verrouillage de l'état de fonctionnement ;
un dispositif de commande (160) conçu pour :
en réponse à la réception d'une entrée pour l'instruction d'une définition de fonction de verrouillage, commander l'unité de prise de vue (170) pour recevoir une première image du visage humain en définissant une première luminosité en tant que luminosité de l'unité d'affichage (130),
commander l'unité de prise de vue (170) pour recevoir une deuxième image du visage humain en définissant la deuxième luminosité en tant que luminosité de l'unité d'affichage (130), ladite deuxième luminosité étant différente de la première luminosité, et
comparer les première et deuxième images pour extraire une zone d'intérêt possédant une différence de luminosité supérieure à un premier seuil ;
en réponse à la réception d'une entrée pour l'instruction d'une libération de fonction de verrouillage ;
commander l'unité de prise de vue (170) afin de recevoir une troisième image du visage humain en définissant une troisième luminosité en tant que luminosité de l'unité d'affichage (130), ladite troisième luminosité étant identique à la première luminosité ;
commander l'unité de prise de vue (170) afin de recevoir une quatrième image du visage humain en définissant une quatrième luminosité en tant que luminosité de l'unité d'affichage (130), ladite quatrième luminosité étant différente de la troisième luminosité et étant identique à la deuxième luminosité ;
comparer la quatrième image avec la troisième image dans une zone
correspondant à la zone d'intérêt extraite des première et deuxième images comparées, et
reconnaître que le visage humain acquis après l'instruction de libération de fonction de verrouillage est le même que le visage humain acquis après l'instruction d'installation de fonction de verrouillage, lorsque le changement de luminosité de la zone d'intérêt correspondante de la troisième image et de la quatrième image est supérieure ou égale à un second seuil préétabli, ledit second seuil prédéfini étant inférieur au premier seuil.

6. Appareil (100) selon la revendication 5, ledit dispositif de commande (160) étant conçu en outre pour :
commander l'unité de prise de vue (170) afin de recevoir de manière répétitive la quatrième image tout en augmentant la luminosité de l'unité d'affichage (130) de la troisième luminosité à une luminosité limitée à une vitesse inférieure à une valeur prédéfinie, et
reconnaître que le visage humain acquis après l'instruction de libération de fonction de verrouillage est le même que le visage humain acquis après l'instruction de définition de fonction verrouillage sur la base de la différence de luminosité de la zone d'intérêt correspondante en comparant la quatrième image avec le troisième image tout en augmentant la luminosité de l'unité d'affichage (130).

7. Appareil (100) selon la revendication 5, ledit dispositif de commande (160) étant conçu en outre pour :
détecter une direction du visage humain dans la troisième image, convertir l'image ou une image cible de comparaison
selon la direction reconnue du visage humain, et
comparer l'image cible de comparaison convertie avec la troisième image ou comparer l'image cible de comparaison avec la première image convertie.

8. Appareil (100) selon la revendication 5, ledit dispositif de commande (160) étant conçu en outre pour :
commander le second seuil par rapport à une zone d'intérêt relativement éloignée de la direction du visage humain de la troisième image telle que comparée avec une direction du visage humain de la première image selon la direction reconnue du visage humain.
